# EUROPÄISCHE PATENTSCHRIFT

(11) **EP 1 405 695 B1**
(45) Veröffentlichungstag und Bekanntmachung des Hinweises auf die Patenterteilung: **31.05.2006**
(21) Anmeldenummer: 03021903.4
(22) Anmeldetag: 29.09.2003
(51) Int. Cl.: B23Q 11/00, B23Q 11/14, F25D 17/08, B60H 1/00, F24F 13/00

(54) **Klimatisierungseinrichtung fuer eine Arbeitsmaschine insbesondere fuer eine Werkzeugmaschine**
Air conditioning system for a working machine, especially for a machine-tool
Système de climatisation pour machine de travail, spécialement pour une machine-outil

(30) Priorität: 02.10.2002 IT MI20022077
(43) Veröffentlichungstag der Anmeldung: 07.04.2004
(73) Patentinhaber: Parpas S.p.A., 35010 Cadoneghe (Padova) (IT)
(72) Erfinder: Parpaiola, Vladi, 35010 Cadoneghe (Padova) (IT)
(74) Vertreter: Mayer, Hans Benno

(56) Entgegenhaltungen:
- EP-A- 0 355 730
- EP-A- 1 195 225
- DD-A- 147 518
- US-A- 2 221 127
- PATENT ABSTRACTS OF JAPAN vol. 2003, no. 04, 2. April 2003 (2003-04-02) & JP 2002 346860 A (MITSUBISHI HEAVY IND LTD), 4. Dezember 2002 (2002-12-04)

## Beschreibung

Die vorstehende Erfindung betrifft eine Klimatisierungseinrichtung für eine Arbeitsmaschine, insbesondere für eine Werkzeugmaschine (siehe, z.B., P-1195225-A ).

Es ist vom Stand der Technik her bekannt geworden, dass Arbeitsmaschinen, insbesondere Werkzeugmaschinen mit einer Vielzahl steuerbarer Motoren ausgerüstet sind, um ein genaues Verschieben der beweglichen Bauteile der Maschine zu ermöglichen.

Sowohl Temperaturschwankungen, die an dem Ort auftreten, an dem die Maschine aufgestellt ist, als auch Wärmeentwicklung, die von verschiedenen zum Einsatz gelangenden Motoren herrührt, als auch durch Reibung verursachte Wärme während eines Verschiebens von beweglichen Bauteilen der Werkzeugmaschine, führen auch zu einem unerwünschten und unregelmäßigen Erwärmen des Grundgestells der Maschine sowie der verfahrbaren Bauteile der Werkzeugmaschine.

Um den Auswirkungen, die durch diese unregelmäßige Erwärmung der Werkzeugmaschine eintreten, entgegenzuwirken, welche zu einer Verminderung in der geforderten Genauigkeit der Maschine führen, wurde in der Vergangenheit vorgeschlagen, im Gestell der Maschine Kanäle oder Ausnehmungen vorzusehen, die von einem Kühlmedium durchströmt werden.

Es ist leicht verständlich, dass dieses bekannte Kühlsystem, welches im Inneren der Werkzeugmaschine angeordnet ist, keine Möglichkeit eröffnet, das Maschinengestell gleichmäßig und nicht nur in Bezug auf einige Teile der Maschine zu kühlen oder allgemein zu klimatisieren.

Es ist daher Aufgabe der vorstehenden Erfindung die Nachteile des Standes der Technik zu vermeiden und eine Klimatisierungseinrichtung vorzuschlagen, die es ermöglicht, die Maschine oder Teile der Maschine einem gezielten Klimatisierungsvorgang auszusetzen, welcher die unterschiedlichen Klimatisierungsansprüche oder Kühlvorgänge berücksichtigt.

Diese Aufgabe wird mit einer Klimatisierungseinrichtung nach Anspruch 1 gelöst,

Weitere Merkmale der Erfindung können der nun folgenden Beschreibung, den beigefügten Zeichnungen sowie den Unteransprüchen entnommen werden.

Mit der Klimatisierungseinrichtung nach der vorstehenden Erfindung wird der Vorteil erzielt, dass die Maschine vollständig gegenüber dem Aufstellungsort der Werkzeugmaschine isoliert ist; dank der vorgeschlagenen Klimatisierungseinrichtungen wird es möglich, sowohl das Gestell der Maschine als auch gezielt Bauteile derselben auf einer konstanten Temperatur zu halten.

Dank der vorgeschlagenen Isolierung der Werkzeugmaschine gegenüber dem Aufstellungsort, unter Verwendung von wärmeisolierenden Platten und Bauteilen wird es ermöglicht, die Werkzeugmaschine in vollständig thermisch klimatisierter Umgebung zu betreiben und unter Vorsehung von mehreren Leitungen zum Zuführen von Luft oder einem für die Klimatisierung vorgesehenen Gases wahlweise an verschiedenen Stellen der Maschine und unter Vorsehung der Möglichkeit die Strömung der Klimatisierungsluft an verschiedene Stellen der Werkzeugmaschine zu leiten und die Strömung in Übereinstimmung mit unterschiedlichen Bauteilen der Maschine zu steuern. Somit wird es möglich, die Gleichmäßigkeit und Wiederholbarkeit von spanabhebenden Bearbeitungsvorgängen wesentlich zu verbessern, dank eines Maschinengestelles sowie verschiedener Baugruppen, die nicht in unregelmäßiger Weise verformt werden.

Der Erfindungsgegenstand wird nun genauer beschrieben und in den beigefügten Zeichnungen dargestellt. Es zeigen:
Figur 1 in perspektivischer Ansicht eine Werkzeugmaschine, die im Inneren eines Behältnisses angeordnet ist, das auch die Klimatisierungseinrichtungen aufnimmt.

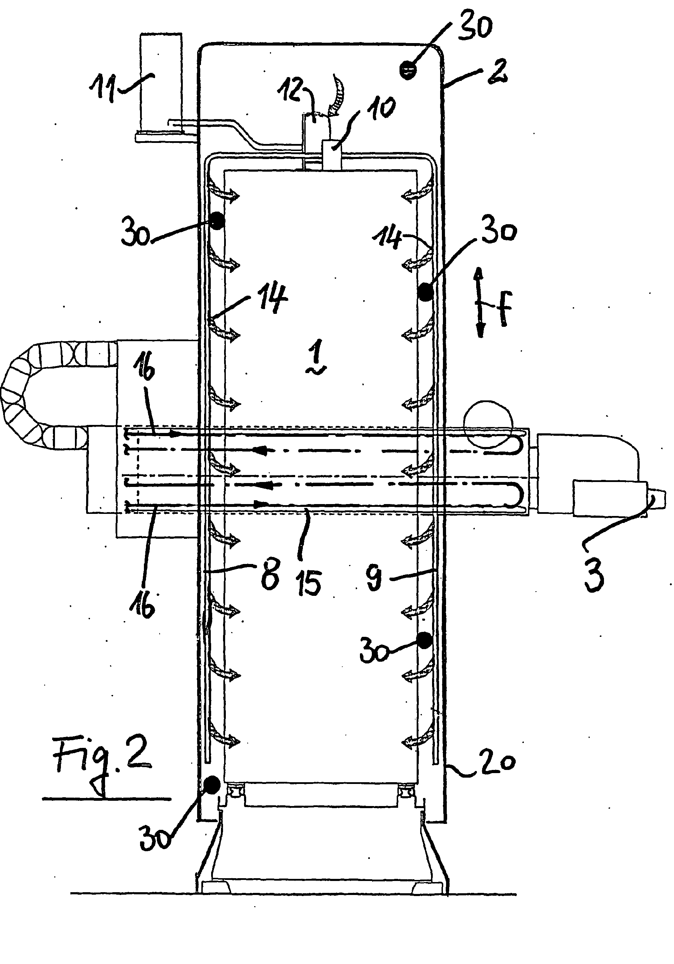

Figur 2 die Werkzeugmaschine in Ansicht mit dem im Schnitt dargestellten Behältnis.

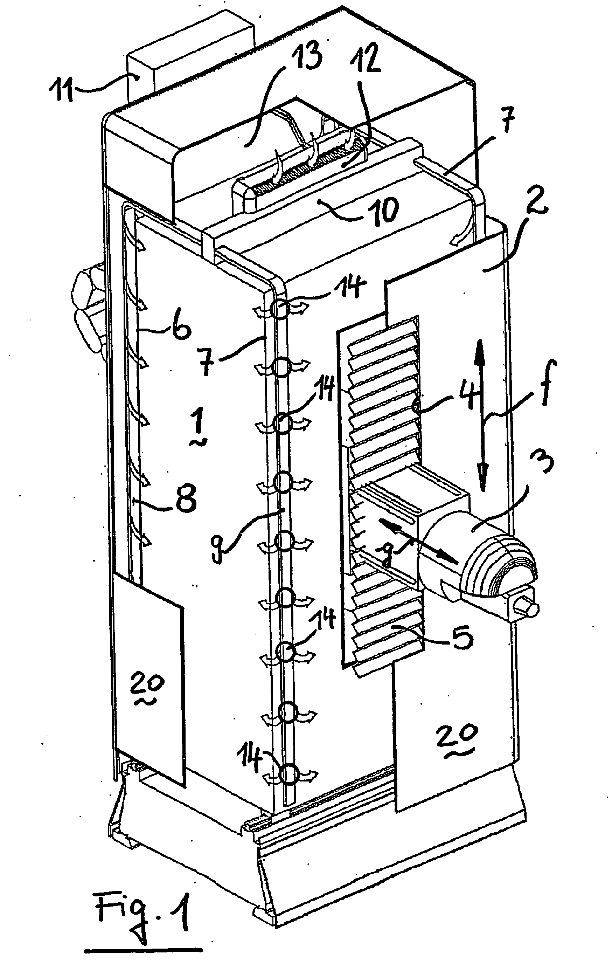

Wie der Figur 1 zu entnehmen ist, ist die gesamthaft mit 1 gekennzeichnete Werkzeugmaschine, z.B. eine Fräsmaschine im Inneren eines Behältnisses 2 angeordnet, dieses Behältnis besteht aus thermisch isolierenden Materialien und ist um das Maschinengestell angeordnet.

Das gesamte Gestell der Maschine 1 ist im Inneren des Behältnisses angeordnet. Ausnahme gilt hier ausschließlich für den verfahrbaren Kopf 3 zur Aufnahme der Werkzeugspindel.

Da die Werkzeugaufnahmespindel 3 eines Bohrwerkes oder einer Fräsmaschine Bewegungen gemäß den Doppelpfeilen (f,g) durchführen kann, weist das Behältnis 2 eine Öffnung 4 auf, welche dank der Vorsehung von Faltenbälgen 5 abgedichtet ist.

In der Nähe z.B. der Kanten 6,7 oder anderer nicht dargestellter Kanten, sowie in Übereinstimmung mit anderen Zonen des Maschinengestells 1 sind Leitungen 8,9 vorgesehen, die sich über die gesamte Höhe der Maschinen erstrecken.

Die Leitungen 8,9 sowie weitere Rohrleitungen münden in einen Kollektor 10 oder in mehrere Kollektoren, die nur schematisch dargestellt sind. Der Kollektor 10 ist mit einem Klimatisierungsgerät 11 wirkverbunden.

Die Leitungen 8,9 sowie andere Leitungen, die zum Verteilen der Klimatisierungsluft oder eines anderen Klimatisierungsmediums vorgesehen sind, wie dies schematisch für die Leitung 9 in Figur 1 dargestellt ist, weisen im Abstand Öffnungen für den Austritt der Klimatisierungs-Luftströme auf.

Das gesamte System arbeitet in vorteilhafter Weise unter Zuhilfenahme von Wärmesensoren 30, welche an verschiedenen Stellen des Maschinengestelles angeordnet sind und die Aufgabe haben, örtlich die vorherrschende Temperatur zu messen, um eine entsprechende thermische Klimatisierung in unterschiedlichen und voneinander unabhängigen Zonen der Maschine durchführen zu können.

Es hat sich auch als vorteilhaft erwiesen, elektronische Bauteile oder Außeneinrichtungen für die Steuerung der Strömung der Klimatisierungsluft vorzusehen.

In vorteilhafter Weise sind die Ausströmöffnungen 14 mit steuerbaren Regelventilen ausgerüstet, um somit die Menge der zuzuführenden Klimatisierungsluft festlegen zu können. So werden in einer Zone, in der größere Kühlvorgänge vorzunehmen sind, die Ventile 14 maximal geöffnet sein, wogegen in Zonen in der eine geringere Klimatisierungsleistung erforderlich ist, die zugeordneten Ventile 14 teilweise gedrosselt werden können.

In vorteilhafter Weise, besteht das Behältnis 2, welches das Gestell der Maschine 1 umgibt, aus Platten 20, die sich durch hohe thermische Isolierung auszeichnen; in vorteilhafter Weise sind diese Isolierplatten abnehmbar ausgebildet, um dem Bedienungsmann der Werkzeugmaschine 1 zu ermöglichen, ungehindert bis an das Gestell der Maschine zu gelangen.

Die Platten 20 sind dinekt am Gestell der Werkzeugmaschine montiert.

Mit besonderem Vorteil, sind auch Baugruppen, wie z.B. der Schlitten 15, der gegenüber dem Gestell der Werkzeugmaschine beweglich angeordnet ist, thermisch beeinflusst, in dem Kanäle in den Schlittenkörper 15 eingearbeitet sind und von einer Klimatisierungsflüssigkeit mit gesteuerter Temperatur durchströmt werden, wie dies schematisch mit dem Bezugszeichen 16 angedeutet ist.

Dank der Vorsehung verschiedener Kanalgruppen 16, die z.B. an den vier Kanten des Maschinenschlittens 15 angeordnet sind, besteht die Möglichkeit, dieses Bauteil thermisch in gewünschter Weise zu beeinflussen.

Unter Auswahl verschiedener Temperaturen für das Kühlmedium, welches in den unterschiedlichen Kanälen fließt, wird die geometrische Gestalt des Schlittens beeinflusst, z.B. besteht die Möglichkeit, die Durchbiegung des Schlittens aufgrund seines Eigengewichtes in horizontaler Erstreckung des Schlittens 15 oder anderer Bauteile, z.B. des Spindelkopfes zu beeinflussen, indem ein kälteres Medium in die oberen Kanäle und ein wärmeres Medium in die unteren Kanäle geleitet wird, wodurch eine Verformung eintritt, mit der die Durchbiegung des Schlittens ausgeglichen wird.

## Patentansprüche

1. Klimatisierungseinrichtung für eine Arbeitsmaschine, insbesondere für eine Werkzeugmaschine, wobei das Gestell der Arbeits maschine (1) im Inneren eines Behältnisses (2) angeordnet ist, welches nach außen abgedichtet ist und in Übereinstimmung mit ausgewählten Zonen (1), die thermisch zu klimatisieren sind, Leitungen (8, 9) angeordnet sind, welche Austrittsöffnungen (14) für einen Luftstrom aufweisen und die Leitungen (8,9) mit einem Kollektor (10) in Wirkverbindung stehen, der für die Verteilung klimatisierter Luft dient, welche von einem Klimatisierungsgerät (11) angeliefert wird,
**dadurch gekennzeichnet,**
**dass** in Übereinstimmung mit verschiebbar angeordneten Bauteilen oder vom Behältnis (2) abstehenden Bauteilen (3, 15), das Behältnis (2) eine Öffnung (4) aufweist, welche abgedichtet unter Verwendung eines Faltenbalges (5) abgeschlossen ist und die verschiebbaren, den Faltenbalg (5) durchdringenden und vom Behältnis abstehenden Bauteile (3, 15) der Maschine (1), in ihrem Inneren obere und untere Kanäle (16) aufweisen, die von einem Klimatisierungsfluid durchströmt werden.

2. Klimatisierungseinrichtung für eine Arbeitsmaschine, nach Patentanspruch 1, **dadurch gekennzeichnet, dass** das Behältnis (2) unter Verwendung von Platten aus thermisch isolierendem Material hergestellt ist.

3. Klimatisierungseinrichtung für eine Arbeitsmaschine, nach Patentanpruch 1, **dadurch gekennzeichnet, dass** die Öffnungen (14) für den Austritt des Klimatisierungsmediums, die in die Leitungen 8,9 eingearbeitet sind, mit steuerbaren Ventilen, ausgerüstet sind, um die austretende Menge der Kühlluft festzulegen.

4. Klimatisierungseinrichtung für eine Arbeitsmaschine, nach Patentanspruch 1, **dadurch gekennzeichnet, dass** die Platten (20) zur Bildung des Behältnisses (2) als abnehmbare Plattenteile ausgebildet sind.

5. Klimatisierungseinrichtung für eine Arbeitsmaschine, nach Patentanspruch 1, **dadurch gekennzeichnet, dass** im Inneren des Behältnisses (2) thermische Sensoren (30) vorgesehen sind, mit denen die örtliche Temperatur im Inneren des Behältnisses (2) messbar ist, dass die Sensoren (30) mit der Einrichtung zur numerischen Steuerung der Maschine (1) wirkverbunden sind und die Öffnungen (14) in den Leitungen (8,9) mit Elektroventilen ausgestattet sind, welche in Richtung eines Öffnungsvorganges bzw. eines Schließvorganges über Signale ansteuerbar sind, wobei die Signale von der numerischen Steuerung der Werkzeugmaschine abgegeben werden.

## Claims

1. Air-conditioning system for a working machine, especially for a machine tool, in which the frame of the working machine (1) is arranged in the interior of a receptacle (2) which is sealed with respect to the outside, and lines (8, 9) which have outlet openings (14) for an air flow are arranged to correspond with selected zones (1) which are to be thermally conditioned, and the lines (8, 9) are operatively connected to a manifold (10) which serves for the distribution of conditioned air which is supplied from an air-conditioning device (11), **characterized in that**, to correspond with displaceably arranged components or components (3, 15) projecting from the receptacle (2), the receptacle (2) has an opening (4) which is closed off in a sealed manner using a bellows (5), and the displaceable components (3, 15) of the machine (1) which pass through the bellows (5) and project from the receptacle are provided in their interior with upper and lower ducts (16) which have a conditioning fluid flowing through them.

2. Air-conditioning system for a working machine, according to Patent Claim 1, **characterized in that** the receptacle (2) is produced using plates made of thermally insulating material.

3. Air-conditioning system for a working machine, according to Patent Claim 1, **characterized in that** the openings (14) for letting out the conditioning medium which are made in the lines (8, 9) are equipped with controllable valves so as to fix the amount of cooling air which exits.

4. Air-conditioning system for a working machine, according to Patent Claim 1, **characterized in that** the plates (20) used for forming the receptacle (2) are designed as removable plate parts.

5. Air-conditioning system for a working machine, according to Patent Claim 1, **characterized in that** thermal sensors (30) are provided in the interior of the receptacle (2) and can be used to measure the local temperature in the interior of the receptacle (2), **in that** the sensors (30) are operatively connected to the numerical control means for the machine (1), and the openings (14) in the lines (8, 9) are equipped with solenoid valves which can be controlled by signals to perform an opening operation or a closing operation, the signals being output by the numerical control unit for the machine tool.

## Revendications

1. Système de climatisation pour une machine de travail, en particulier pour une machine-outil, le bâti de la machine de travail (1) étant disposé à l'intérieur d'un récipient (2) qui est rendu étanche vis-à-vis de l'extérieur et en coïncidence avec des zones sélectionnées (1) qui doivent être climatisées thermiquement, sont disposées des conduites (8, 9) qui présentent des ouvertures de sortie (14) pour un flux d'air et les conduites (8, 9) étant en liaison coopérante avec un collecteur (10) qui sert à distribuer l'air climatisé, qui est fourni par un appareil de climatisation (11),
**caractérisé en ce que**
en coïncidence avec des composants disposés de manière déplaçable ou des composants (3, 15) saillant depuis le récipient (2), le récipient (2) présente une ouverture (4) qui est fermée de manière étanche en utilisant un soufflet (5), et les composants déplaçables (3, 15) de la machine (1) traversant le soufflet (5) et saillant depuis le récipient, présentent dans leur intérieur des canaux supérieurs et inférieurs (16) qui sont parcourus par un fluide de climatisation.

2. Système de climatisation pour une machine de travail selon la revendication 1, **caractérisé en ce que** le récipient (2) est fabriqué en utilisant des plaques en matériau thermiquement isolant.

3. Système de climatisation pour une machine de travail selon la revendication 1, **caractérisé en ce que** les ouvertures (14) pour la sortie du fluide de climatisation, qui sont pratiquées dans les conduites 8, 9, sont munies de soupapes commandables afin d'établir la quantité d'air de refroidissement sortant.

4. Système de climatisation pour une machine de travail selon la revendication 1, **caractérisé en ce que** les plaques (20) formant le récipient (2) sont réalisées sous forme de pièces de plaques amovibles.

5. Système de climatisation pour une machine de travail selon la revendication 1, **caractérisé en ce que** des capteurs thermiques (30) sont prévus à l'intérieur du récipient (2), avec lesquels la température locale peut être mesurée à l'intérieur du récipient (2), **en ce que** les capteurs (30) sont en liaison coopérante avec le système pour la commande numérique de la machine (1) et les ouvertures (14) dans les conduites (8, 9) sont munies d'électrovannes qui peuvent être commandées dans la direction d'une opération d'ouverture ou de fermeture par le biais de signaux, les signaux étant émis par la commande numérique de la machine-outil.
